# EUROPÄISCHE PATENTSCHRIFT

(11) **EP 2 936 656 B1**
(45) Veröffentlichungstag und Bekanntmachung des Hinweises auf die Patenterteilung: **07.06.2017**
(21) Anmeldenummer: 13810933.5
(22) Anmeldetag: 17.12.2013
(51) Int. Cl.: H02K 3/52, H02K 3/38

(54) **ROTORPAKET MIT FUNKTIONSTRÄGER**
ROTOR ASSEMBLY HAVING A FUNCTIONAL CARRIER
BLOC ROTOR À SUPPORT FONCTIONNEL

(30) Priorität: 20.12.2012 DE 102012223977
(43) Veröffentlichungstag der Anmeldung: 28.10.2015
(73) Patentinhaber: Hilti Aktiengesellschaft, 9494 Schaan (LI)
(72) Erfinder: MAHLER, Thomas, 18299 Laage (DE); SCHAEFER, Thomas, 86836 Obermeitingen (DE); HUFNAGEL, Peter, 87666 Pforzen (DE)
(86) Internationale Anmeldenummer: PCT/EP2013/076822
(87) Internationale Veröffentlichungsnummer: WO 2014/095802

(56) Entgegenhaltungen:
- GB-A- 2 290 172
- US-A1- 2010 264 757

## Beschreibung

Die Erfindung betrifft einen Rotor für eine elektrodynamische Maschine, insbesondere einen Elektromotor. Der Rotor enthält ein Rotorpaket mit einem ersten Rotorende und einem zweiten Rotorende sowie einer Vielzahl miteinander verbundener Blechringe. Jeder Blechring enthält wenigstens ein Stegelement. Die einzelnen Stegelemente formen in Reihe zueinander positioniert einen Steg. Des Weiteren enthält der Rotor eine Stegisolation mit zumindest einem Wickelstützelement zur Aufnahme einer Rotorspule.

Üblicherweise besteht ein Rotor bzw. Läufer, Anker, Induktor oder Polrad für einen Elektromotor unter anderem aus einem Rotorpaket. Das Rotorpaket wird hierzu aus einzelnen Blechringen gebildet. Dazu verfügt das Rotorpaket über eine Anzahl an Rotorpolen bzw. Stege, welche sich radial in das Innere des Rotorpakets erstrecken. Zwischen den einzelnen Rotorpolen befinden sich dabei Zwischenräume in Form von Polnuten.

Gewöhnlich wird die Innenfläche des Rotorpakets, die Rotorpole sowie die Polnuten mit einem Kunststoff umspritzt bzw. ummantelt. Alternativ können die Polnuten auch mit Papier isoliert werden. Bei dem Kunststoff kann es sich beispielsweise um Polymere, wie z.B. Duroplast oder Thermoplast, handeln. Die Kunststoff-Umspritzung formt dabei jeweils um die einzelnen Rotorpole die eigentlichen Wickelstützen, welche zur Aufnahme der Rotorspulen dienen.

Ein Nachteil an diesen Rotoren gemäss dem Stand der Technik besteht darin, dass kein ausreichender Schutz gegen den relativ hohen Drahtzug vorgesehen ist, welcher beim Wickeln der Rotorspulen notwendig ist, und auf die Wickelstützen wirkt. Durch diesen Drahtzug kann es zu einer Verformung oder sogar zu einem Abbrechen der Wickelstützen an den Enden des Rotorpakets kommen.

Das Dokument US 2010/0264757 A1 offenbart einen Stator mit einem Wickelstützelement.

Eine Aufgabe der vorliegenden Erfindung besteht darin, die vorstehend genannten Probleme zu lösen und damit einen Rotor bereitzustellen, welcher auf einfache Art und Weise sowie kostengünstig den Anforderungen des Wickelprozesses, insbesondere den Anforderungen des hohen Drahtzugs, genügt.

Die Aufgabe wird erfindungsgemäss durch einen Rotor für eine elektrodynamische Maschine, insbesondere einen Elektromotor. Der Rotor enthält ein Rotorpaket mit einem ersten Rotorende und einem zweiten Rotorende sowie einer Vielzahl miteinander verbundener Blechringe. Jeder Blechring enthält wenigstens ein Stegelement. Die einzelnen Stegelemente formen in Reihe zueinander positioniert einen Steg. Des Weiteren enthält der Rotor eine Stegisolation mit zumindest einem Wickelstützelement zur Aufnahme einer Rotorspule.

Erfindungsgemäss ist mindestens ein Endblechelement mit wenigstens einem Abstützelement vorgesehen, wobei das Endblechelement wenigstens teilweise in dem Wickelstützelement angeordnet ist. Durch das zusätzlich vorhandene Endblechelement verfügen die Wickelstützelement an deren Enden über ausreichende Widerstandskraft gegen die relativ hohen Kräfte des Wickelprozesses, insbesondere des Drahtzuges.

Entsprechend einer alternativen Ausgestaltungsform der vorliegenden Erfindung kann das Endblechelement an dem ersten Rotorende positioniert sein. Darüber hinaus ist es jedoch auch möglich, dass ein weiteres Endblechelement an dem zweiten Rotorende positioniert sein kann. Das Endblechelement kann dabei durch eine Kraftschluss-, Formschluss- oder Stoffschlussverbindung mit dem Rotorpaket verbunden werden.

Gemäss einer weiteren vorteilhaften Ausgestaltung der vorliegenden Erfindung kann vorgesehen sein, dass das Abstützelement einen ersten Abschnitt sowie einen zweiten Abschnitt enthält, wobei sich der erste Abschnitt im Wesentlichen in einer ersten Ebene erstreckt und sich der zweite Abschnitt im Wesentlichen in einer weiteren Ebene rechtwinkelig zu der ersten Ebene sowie in Richtung eines Rotorendes erstreckt.

Durch die rechtwinklig zueinander stehenden Abschnitte des Abstützelements ist eine Abstützung der Wickelstützelemente sowohl in radialer als auch in axialer Ausrichtung gegen die auftretenden Kräfte des Drahtzugs der Wickelung gewährleistet.

Der erste Abschnitt des Abstützelements kann an einer Stirnseite des Stegs positioniert sein. Hierdurch ist sichergestellt, dass der erste Abschnitt des Abstützelements nicht zwischen den einzelnen Stegen herausragt und dadurch der Rotorwicklung im Wege ist.

Des Weiteren kann ein Versteifungselement zwischen dem ersten Abschnitt und dem zweiten Abschnitt vorgesehen sein, wodurch ein Verformen des ersten und zweiten Abschnitts zueinander verhindert und zusätzliche Stabilität erzeugt werden kann. Das Versteifungselement kann dabei in Form von zusätzlich aufgebrachtem Material zwischen dem ersten und zweiten Abschnitt ausgestaltet sein. Darüber hinaus kann das Versteifungselement auch als entsprechende Versteifungsrippe oder-vertiefung ausgestaltet sein.

Gemäss einer weiteren Ausgestaltungsform der vorliegenden Erfindung kann das Abstützelement in Form einer gebogenen Kontur ausgestaltet sein, wobei sich jeweils ein freies Ende des Abstützelementes in Richtung eines Rotorendes erstreckt. Durch diese besondere Ausgestaltungsform des Abstützelements kann eine Stresskonzentration in der Schnittstelle zwischen dem ersten und zweiten Abschnitt effektiv vermieden werden.

Um dem Endblechelement eine besonders hohe Widerstandskraft und eine höhere Festigkeit gegen die relativ hohen Kräfte des Wickelprozesses, insbesondere des Drahtzuges, zu geben, kann das Endblechelement aus einem höherfesten Werkstoff gebildet sein.

Weitere Vorteile ergeben sich aus der folgenden Zeichnungsbeschreibung. In der Zeichnung ist ein Ausführungsbeispiel der vorliegenden Erfindung dargestellt. Die Zeichnung, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Fig. 1: eine perspektivische Ansicht eines erfindungsgemässen Rotors mit einem Rotorpaket sowie einem Endblechelement auf einer Antriebswelle;
- Fig. 2: eine Seitenansicht des erfindungsgemässen Rotors mit einem Rotorpaket sowie einem Endblechelement auf einer Antriebswelle;
- Fig. 3: eine perspektivische Ansicht des Endblechelements auf einer Antriebswelle; und

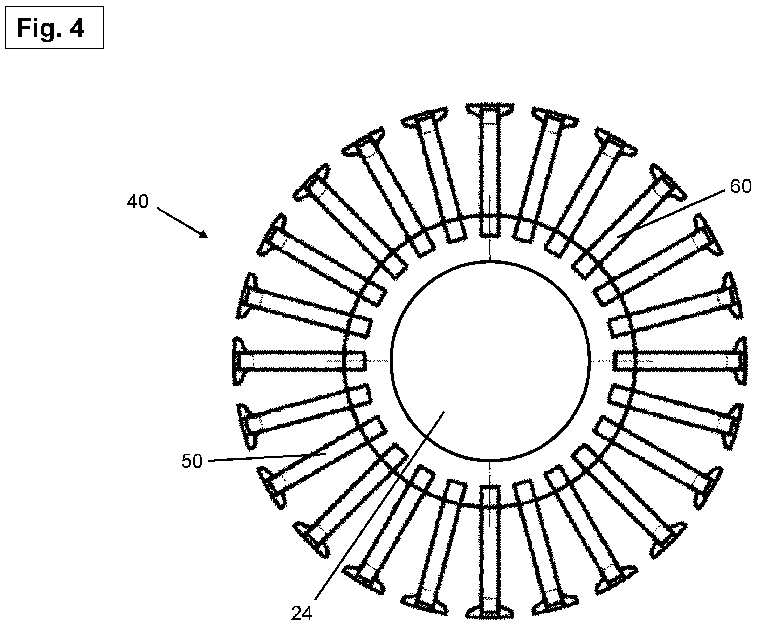

- Fig. 4: eine Frontansicht des Endblechelements.

### Ausführungsbeispiel der vorliegenden Erfindung

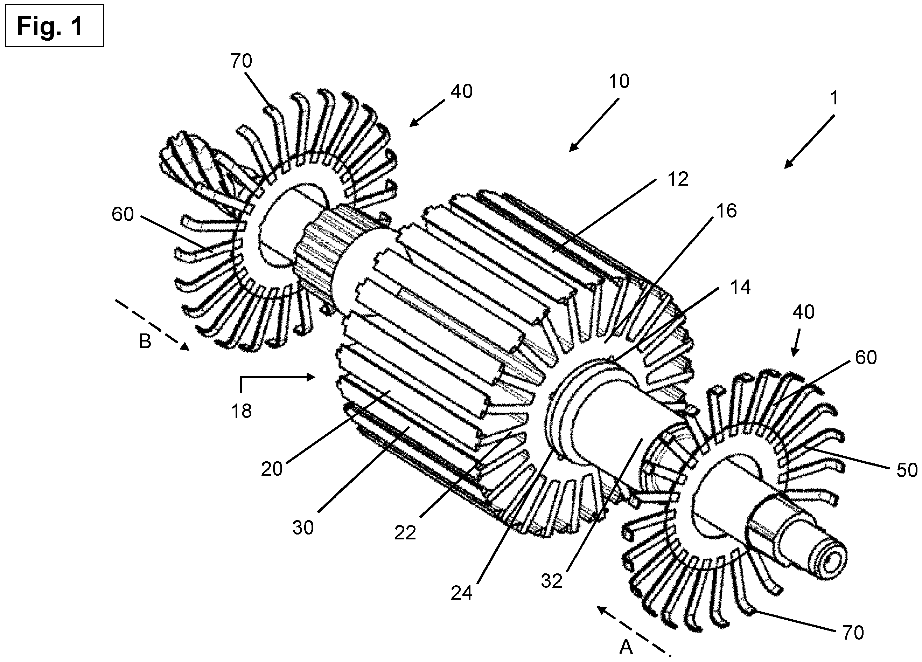

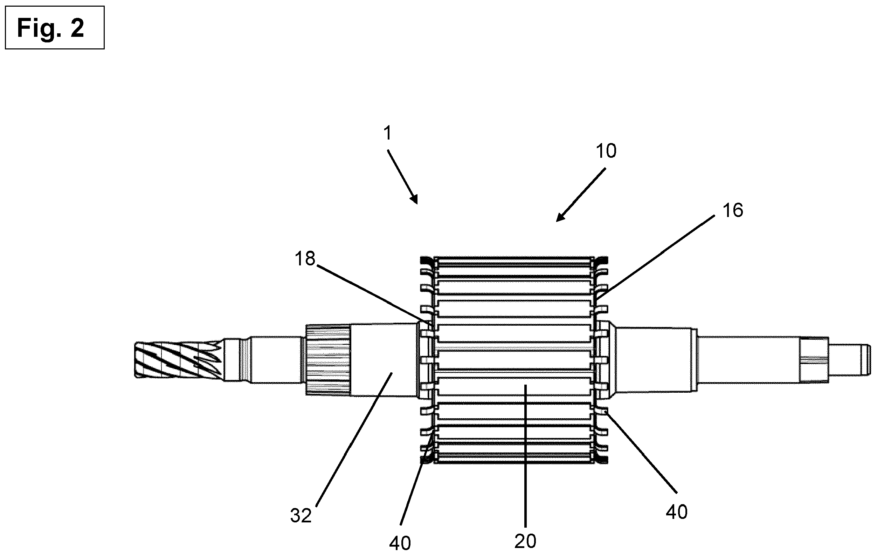

Fig. 1 und 2 zeigen einen Rotor 1 für eine elektrodynamische Maschine, insbesondere für einen Elektromotor.

Der Rotor 1 besteht im Wesentlichen aus einem Rotorpaket 10, einer (nicht gezeigten) Stegisolation und einem Endblechelement 40.

Das Rotorpaket 10 setzt sich aus mehreren einzelnen Blechringen 20 zusammen, welche miteinander fest verbunden sind, wodurch dem Rotor 1 sowie dem Rotorpaket 10 eine im Wesentlichen zylindrische Form gegeben wird. Des Weiteren weist das Rotorpaket 10 eine Aussenfläche 12, eine Innenfläche 14 sowie ein erstes Rotorende 16 und ein zweites Rotorende 18 auf.

Die einzelnen Blechringe 20 weisen eine sternförmige Form mit vierundzwanzig gleichmässig verteilten Stegelementen 22 auf, die sich von einer zentralen Durchgangsöffnung 24 des Rotorpakets 10 radial nach aussen erstrecken.

Wenn die einzelnen Blechringe 20 zu dem Rotorpaket verbunden sind, bilden die einzelnen Stegelemente 22 zusammen vierundzwanzig durchgehende Stege 30, welche sich entlang der Aussenfläche 12 des Rotorpakets 10 über dessen gesamte Länge des Rotorpakets 10 erstrecken (vgl. Fig. 2). Die Stege 30 bilden dabei die Rotorpole.

Durch die sternförmige Form der Blechringe 20 erhält das Rotorpaket 10 die Form eines Zylinders mit der zentralen Durchgangsöffnung 24. Die Durchgangsöffnung 24 dient zur Aufnahmen einer Antriebswelle 32, welche die durch den Elektromotor erzeugte Drehzahl bzw. das erzeugte Drehmoment zur Nutzung weitergibt.

Die (nicht gezeigte) Stegisolation ist in Form eines zylindrischen Rohrs mit einem ersten Ende, einem zweiten Ende, einer Innenfläche und einer Aussenfläche. An der Aussenfläche weist die Stegisolation vierundzwanzig gleichmässig verteilte Wickelstützelemente auf, welche sich radial nach Aussen erstrecken. Die Wickelstützelemente umschliessen die Stege 30 des Rotorpakets 10 und weisen einen länglichen Grundkörper mit einer Trägerplatte auf. Jedes Wickelstützelement wird jeweils mit einem nicht gezeigten Draht (z.B. Kupferdraht) zu einer Rotorspule umwickelt. Der nicht gezeigte Draht wird dabei mehrmals um den länglichen Grundkörper und unterhalb der Trägerplatte des Wickelstützelementes gewickelt.

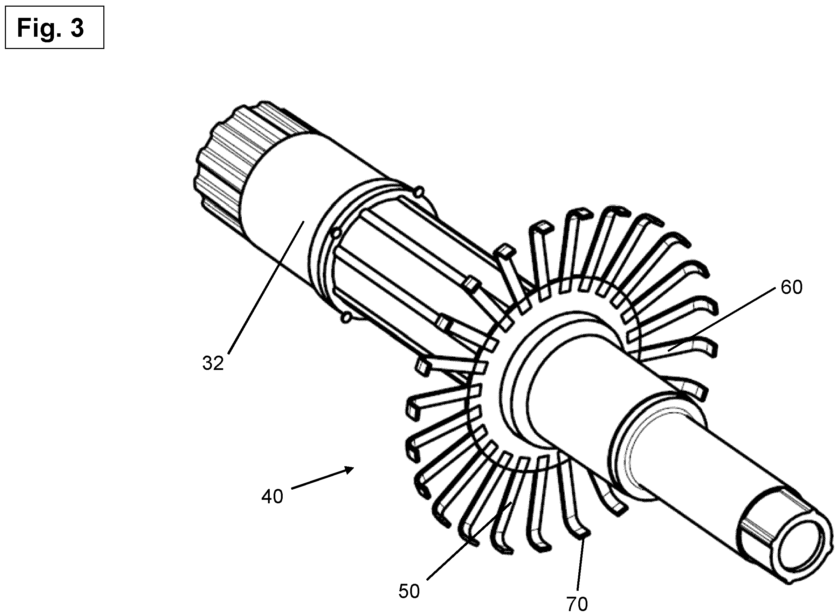

Wie in Fig. 3 gezeigt, entspricht das Endblechelement 40 im Wesentlichen der Form eines Blechringes 20 in Form eines vierundzwanzigzackigen Sterns. Das Endblechelement 40 enthält wiederum vierundzwanzig gleichmässig verteilte einzelne Abstützelemente 50, welche sich radial nach aussen erstrecken. Die Abstützelemente 50 bestehen wiederum aus einem ersten Abschnitt 60 und einem zweiten Abschnitt 70. Der erste Abschnitt 60 erstreckt sich dabei radial nach aussen. Der zweite Abschnitt 70 verläuft in einem rechten Winkel zu dem ersten Abschnitt 60 und weist dabei in Richtung des Rotorendes 16.

Das Endblechelement 40 ist teilweise integraler Bestandteil der (nicht gezeigten) Stegisolation. Wie in Fig. 1 gezeigt wird das Endblechelement 40 in Richtung A bzw. in Richtung B an das erste Rotorende 16 bzw. an das zweite Rotorende 18 positioniert, so dass je ein Endblechelement 40 an den jeweilige Rotorenden 16, 18 flächig anliegen. Der erste Abschnitt 60 eines jeden der vierundzwanzig Abstützelemente 50 ist dabei an der Stirnseite eines entsprechenden Stegs 30 angebracht. Der zweite Abschnitt 70 der vierundzwanzig Abstützelemente 50 erstreckt sich in Richtung des ersten Rotorendes 16 bzw. entsprechend in Richtung des zweiten Rotorendes 18.

Wie bereits vorstehend beschrieben umschliesst jede der vierundzwanzig (nicht gezeigten) Wickelstützelemente der (ebenfalls nicht gezeigten) Stegisolation jeweils einen der Stege 30 des Rotorpakets 10. Um jede der vierundzwanzig Wickelstützelemente wird jeweils ein (nicht gezeigter) Draht für eine Spulenwicklung gewickelt. Der erste Abschnitt 60 der vierundzwanzig Abstützelemente 50 des Endblechelements 40 befindet sich damit zwischen der Stirnseite der Stege 30 des Rotorpakets 10 und den Wickelstützelementen der Stegisolation. Hierdurch stützt der erste Abschnitt 60 der Abstützelemente 50 die Stege 30 gegen die axial wirkenden Kräfte, welche durch den Drahtzug der Wicklung erzeugt werden.

Der zweite Abschnitt 70 der Abstützelemente 50 ist in das vordere Ende (d.h. welches sich in Richtung des ersten Rotorendes 16 bzw. in Richtung des zweiten Rotorendes 18 befindet) der Trägerplatte der Wickelstützelemente integriert, um hierdurch die Enden dieser Trägerplatte gegen die radial wirkenden Kräfte des Drahtzuges der Wicklung zu stützen.

## Patentansprüche

1. Rotor (1) für eine elektrodynamische Maschine, insbesondere Elektromotor, enthaltend:
- ein Rotorpaket (10) mit einem ersten Rotorende (16) und einem zweiten Rotorende (18) sowie einer Vielzahl miteinander verbundener Blechringe (20), wobei jeder Blechring (20) wenigstens ein Stegelement (22) enthält und die Stegelemente (22) in Reihe zueinander positioniert einen Steg (30) formen, sowie
- eine Stegisolation mit zumindest einem Wickelstützelement zur Aufnahme einer Rotorspule,
wobei die Wickelstützelemente die Stege (30) des Rotorpakets (10) umschließen und einen länglichen Grundkörper mit einer Trägerplatte aufweisen,
wobei dass mindestens ein Endblechelement (40) mit wenigstens einem Abstützelement (50) vorgesehen ist, wobei das Endblechelement (40) wenigstens teilweise in dem Wickelstützelement angeordnet ist, wobei das Abstützelement (50) einen ersten Abschnitt (60) sowie einen zweiten Abschnitt (70) enthält, wobei sich der erste Abschnitt (60) im Wesentlichen in einer ersten Ebene erstreckt und sich der zweite Abschnitt (70) im Wesentlichen in einer zweiten Ebene rechtwinkelig zu der ersten Ebene sowie in Richtung eines Rotorendes (16, 18) erstreckt, so dass der erste Abschnitt (60) der Abstützelemente (50) die Stege (30) gegen die axial wirkenden Kräfte stützt, welche durch den Drahtzug der Wicklung erzeugt werden und, so dass der zweite Abschnitt (70) der Abstützelemente (50) in das vordere Ende der Trägerplatte der Wickelstützelemente integriert ist, um hierdurch die Enden dieser Trägerplatte gegen die radial wirkenden Kräfte des Drahtzuges der Wicklung zu schützen.

2. Rotor (1) nach Anspruch 1,
**dadurch gekennzeichnet, dass** das Endblechelement (40) an dem ersten Rotorende (16) positioniert ist.

3. Rotor (1) nach Anspruch 1,
**dadurch gekennzeichnet, dass** der erste Abschnitt (60) des Abstützelements (50) an einer Stirnseite eines Stegs (30) positioniert ist.

4. Rotor (1) nach Anspruch 1 oder 3,
**dadurch gekennzeichnet, dass** ein Versteifungselement zwischen dem ersten Abschnitt (60) und dem zweiten Abschnitt (70) des Abstützelements vorgesehen ist.

5. Rotor (1) nach einem der Ansprüche 1 bis 4,
**dadurch gekennzeichnet, dass** das Abstützelement (50) in Form einer gebogenen Kontur ausgestaltet ist, wobei sich jeweils ein freies Ende des Abstützelementes in Richtung eines Rotorendes (16, 18) erstreckt.

6. Rotor (1) nach einem der Ansprüche 1 bis 5,
**dadurch gekennzeichnet, dass** das Endblechelement (40) aus einem höherfesten Werkstoff gebildet ist.

## Claims

1. Rotor (1) for an electrodynamic machine, in particular an electric motor, containing:
- a rotor assembly (10) with a first rotor end (16) and a second rotor end (18), as well as a plurality of interconnected lamination rings (20), each lamination ring (20) containing at least one web element (22) and the web elements (22) positioned in series forming a web (30), and
- web insulation with at least one winding support element for receiving a rotor coil,
wherein the winding support elements surround the webs (30) of the rotor assembly (10) and have an elongated base body with a carrier plate,
wherein at least one end lamination element (40) is provided with at least one support element (50), wherein the end lamination element (40) is arranged at least partly in the winding support element and wherein the support element (50) contains a first section (60) and a second section (70), the first section (60) extending substantially in a first plane and the second section (70) extending substantially in a second plane perpendicular to the first plane and in the direction of a rotor end (16, 18) so that the first section (60) of the support elements (50) supports the webs (30) against the axially acting forces generated by the wire tension of the winding and so that the second section (70) of the support elements (50) is integrated into the front end of the carrier plate of the winding support elements in order thereby to protect the ends of this carrier plate against the radially acting forces of the wire tension of the winding.

2. Rotor (1) according to claim 1, **characterised in that** the end lamination element (40) is positioned at the first rotor end (16).

3. Rotor (1) according to claim 1, **characterised in that** the first section (60) of the support element (50) is positioned on an end face of a web (30).

4. Rotor (1) according to claim 1 or claim 3, **characterised in that** a stiffening element is provided between the first section (60) and the second section (70) of the support element.

5. Rotor (1) according to one of claims 1 to 4, **characterised in that** the support element (50) is designed in the form of a curved contour, a free end of the support element extending in the direction of a rotor end (16, 18).

6. Rotor (1) according to one of claims 1 to 5, **characterised in that** the end lamination element (40) is formed of a higher-strength material.

## Revendications

1. Rotor (1) pour une machine électrodynamique, en particulier un moteur électrique, contenant :
- un empilage de rotor (10) ayant une première extrémité de rotor (16) et une seconde extrémité de rotor (18) et une pluralité de bagues en tôle (20) assemblées les unes aux autres, dans lequel chaque bague en tôle (20) contient au moins un élément de lame (22) et les éléments de lame (22) positionnés en série les uns par rapport aux autres forment une lame (30), et
- un isolant de lame comportant au moins un élément de support d'enroulement pour recevoir une bobine de rotor,
dans lequel les éléments de support d'enroulement entourent les lames (30) de l'empilage de rotor (10) et comportent un corps principal longitudinal ayant une plaque de support,
dans lequel au moins un élément d'extrémité en tôle (40) est prévu avec au moins un élément de support (50), dans lequel l'élément d'extrémité en tôle (40) est agencé au moins partiellement dans l'élément de support d'enroulement,
dans lequel l'élément de support (50) contient une première partie (60) et une seconde partie (70), dans lequel la première partie (60) s'étend sensiblement dans un premier plan et la seconde partie (70) s'étend sensiblement dans un second plan perpendiculaire au premier plan ainsi que dans la direction d'une extrémité de rotor (16, 18), de sorte que la première partie (60) des éléments de support (50) supporte les lames (30) à l'encontre des forces agissant axialement, lesquelles forces sont générées par le tréfilage de l'enroulement, et de sorte que la seconde partie (70) des éléments de support (50) est intégrée dans l'extrémité avant de la plaque de support des éléments de support d'enroulement afin de protéger ainsi les extrémités de cette plaque de support contre les forces agissant radialement et générées par le tréfilage de l'enroulement.

2. Rotor (1) selon la revendication 1, **caractérisé en ce que** l'élément d'extrémité en tôle (40) est positionné sur la première extrémité de rotor (16).

3. Rotor (1) selon la revendication 1, **caractérisé en ce que** la première partie (60) de l'élément de support (50) est positionnée sur une face avant d'une lame (30).

4. Rotor (1) selon la revendication 1 ou 3, **caractérisé en ce qu'**un élément de renfort est prévu entre la première partie (60) et la seconde partie (70) de l'élément de support.

5. Rotor (1) selon l'une des revendications 1 à 4, **caractérisé en ce que** l'élément de support (50) est configuré sous la forme d'un contour incurvé, dans lequel une extrémité libre de l'élément de support s'étend respectivement dans une direction d'une extrémité de rotor (16, 18).

6. Rotor (1) selon l'une des revendications 1 à 5, **caractérisé en ce que** l'élément d'extrémité en tôle (40) est formé à partir d'un matériau à haute résistance.
